# EUROPÄISCHE PATENTSCHRIFT

(11) **EP 1 605 172 B1**
(45) Veröffentlichungstag und Bekanntmachung des Hinweises auf die Patenterteilung: **15.08.2012**
(21) Anmeldenummer: 04405356.9
(22) Anmeldetag: 08.06.2004
(51) Int. Cl.: F16B 12/48, F16B 12/14

(54) **Beschlag zum Verbinden eines länglichen und eines flächigen Bauteils**
Fitting for connecting an elongate structural member and a flat structural member
Ferrure pour assembler un élément structural allongé et un élément structural plat

(43) Veröffentlichungstag der Anmeldung: 14.12.2005
(73) Patentinhaber: Meyer AG, 6373 Ennetbürgen (CH)
(72) Erfinder: Ruedi Meyer, 6373 Ennetbürgen (CH)
(74) Vertreter: Nückel, Thomas

(56) Entgegenhaltungen:
- WO-A-80/02866
- DE-A- 1 753 064
- US-A- 3 603 546
- US-A- 4 367 864

## Beschreibung

### Technisches Gebiet

Die Erfindung betrifft einen Beschlag zum Verbinden eines länglichen und eines flächigen Bauteils, beispielsweise eines Tischbeins und einer Tischplatte aus Holz. Der Beschlag ist insbesondere im Möbelbau einsetzbar.

### Stand der Technik

Aus dem Stand der Technik FR 1.426.294 ist ein Montagebeschlag, vorzugsweise zur Montage von Möbelelementen, bekannt. Mit Hilfe des Beschlags können flächige Bauteile, wie beispielsweise die Seitenteile eines Schranks mit dessen Decken und Bodenplatte verbunden werden. Dazu weist eine der beiden Platten ein Sackloch auf, in das eine mit einem Innen- und einem Aussengewinde versehene Buchse eingeschraubt wird. Eine zweite Platte, die im rechten Winkel mit der ersten Platte verbunden werden soll, weist auf ihrer Stirnseite ein Sackloch auf, in das ein Stift, welcher in die Buchse eingeschraubt wurde, gesteckt wird. Zudem weist die zweite Platte ein quer zum Sackloch verlaufendes weiteres Loch auf, in das eine am Ende konisch verlaufende Schraube eingeschraubt wird. Die Schraube greift in eine ebenfalls konisch verlaufende Verjüngung des Stifts und bewirkt, dass, je weiter sie in die zweite Platte eingeschraubt wird und in die Verjüngung greift, desto mehr wird die erste Platte über den Stift an die zweite Platte herangezogen. Dadurch ist eine rechtwinkelige Verbindung zweier Bauteile möglich, die auch wieder ohne weiteres trennbar ist. Eine derartige Lösung hat jedoch mehrere Nachteile. Zum einen wird die Buchse in der ersten Platte auf Zug beansprucht und kann daher bei größeren Belastungen aus der Platte ausbrechen. Ein weiterer Nachteil besteht darin, dass, falls auf die beiden Platten ein Drehmoment wirkt, die Buchse seitlich ausbrechen kann. Werden die zu verbindenden Platten aus spaltigen Hölzern, wie beispielsweise Tanne, Fichte oder Kastanie gefertigt, so besteht zudem die Gefahr, dass durch die unter Spannung eingeschraubte Buchse die Gefahr besteht, dass das Holz sich spaltet, was auf der Stirnseite der Holzplatte optisch störend ist und zudem die Funktionsfähigkeit, das heisst die Stabilität der Verbindung beeinträchtigt. Ein derartiger Beschlag ist daher für hohe Zug- und Scherbelastungen sowie für große Drehmomente, wie sie beispielsweise bei Tischen auftreten können, nicht geeignet.

Des Weiteren ist aus dem Stand der Technik US 4 367 864 ein Verbindungselement für einen Spindeltreppenpfosten bekannt. In den Pfosten ist ein Montagesteg eingelassen, der quer zur Längsrichtung des Pfostens verläuft. Um den Pfosten montieren zu können, wird zuerst auf der Stirnseite des Pfostens eine Montageplatte über zwei Schrauben mit dem Montagesteg verschraubt. Anschliessend wird an der Stelle, an der der Treppenpfosten zu montieren ist, die Montageplatte auf den Boden geschraubt. Bei dieser Lösung wird der Pfosten auf der Stirnseite mit dem Boden verbunden. Diese Lösung ist jedoch nicht geeignet, um ein Tischbein auf der Längsseite mit einer Tischplatte zu verbinden.

### Darstellung der Erfindung

Eine Aufgabe der Erfindung ist es einen Beschlag zum Verbinden zweier Bauteile anzugeben, bei dem die Gefahr, dass eines der Bauteile im Bereich der Verbindung bei Belastung ausreisst, erheblich reduziert wird. Der erfindungsgemässe Beschlag ist zur Aufnahme hoher Kräfte und Drehmomente geeignet.

Die Aufgabe wird durch einen Beschlag zum Verbinden eines länglichen und eines flächigen Bauteils mit den Merkmalen gemäß Patentanspruch 1 gelöst.

Der erfindungsgemäße Beschlag zum Verbinden eines länglichen und eines flächigen Bauteils weist zwei Montageelemente auf, die im länglichen Bauteil miteinander verbindbar sind. Zudem weist der Beschlag eine Montageplatte auf, die am flächigen Bauteil befestigbar ist und die über zwei Befestigungselemente mit den beiden Montageelementen verbindbar ist.

Vorteilhafte Weiterbildungen der Erfindung ergeben sich aus den in den abhängigen Patentansprüchen angegebenen Merkmalen.

Bei einer ersten Ausführungsform der Erfindung weist das längliche Bauteil zwei Bohrungen zur Aufnahme der beiden Montageelemente auf. Die beiden Bohrungen sind auf einfache Art und Weise und ohne dass es eines speziellen Werkzeugs bedarf, herstellbar.

Bei dieser Ausführungsform der Erfindung sind die beiden Montageelemente mittels eines Schraubgewindes miteinander verbindbar. Auf diese Art und Weise kann eine sichere und stabile Verankerung der beiden Montagelemente im länglichen Bauteil geschaffen werden. Zudem lassen sich die beiden Montageelemente bei Bedarf jederzeit wieder entfernen.

Bei einer zweiten Ausführungsform der Erfindung sind die beiden Montageelemente so ausgebildet, dass sie, wenn sie miteinander verbunden sind, einen starren rechten Winkel bilden. Dadurch lässt sich die Kraft- und Drehmomentübertragung zwischen dem länglichen Bauelement und dem flächigen Bauelement optimieren.

Vorteilhafterweise sind die beiden Befestigungselemente Schrauben und die beiden Montagelemente zu den Schrauben passende Gewindehülsen. Eine solche Schraubverbindung ist einfach und kostengünstig herstellbar und hat zudem den Vorteil, dass sie jederzeit wieder lösbar ist.

Zudem ist es von Vorteil, wenn die Montageplatte beim erfindungsgemäßen Beschlag mittels Schrauben am flächigen Bauteil befestigbar ist. Hierdurch kann eine schnelle und einfache sowie sichere Verbindung zwischen Montageplatte und flächigem Bauteil hergestellt werden. Die Montageplatte kann, bevor sie endgültig auf dem flächigen Bauteil befestigt wird, justiert werden.

Darüber hinaus kann beim erfindungsgemäßen Beschlag die Montageplatte zwei Hülsen aufweisen, die so angeordnet sind, dass sie in Verbindung mit den Schrauben die Montageplatte gegenüber den beiden Montageelementen ausrichtet.

Zur Lösung der Aufgabe wird ferner vorgeschlagen, dass bei dem erfindungsgemäßen Beschlag die Montageplatte eine Versteifung aufweist. Dadurch lässt sich die Steifigkeit der gesamten Verbindung weiter erhöhen.

Bei dem erfindungsgemäßen Beschlag kann nach einem weiteren Merkmal der Erfindung die Montageplatte aus Metallguss hergestellt sein. Dies hat den Vorteil, dass insbesondere bei hohen Stückzahlen die Herstellungskosten gering sind und die Form der Montageplatte bezüglich ihrer Steifigkeit weiter optimierbar ist, ohne dabei erhebliche zusätzliche Kosten zu verursachen.

Bei einer hierzu alternativen Weiterbildung des erfindungsgemäßen Beschlags weist die Montageplatte zwei Winkelbleche auf, wobei zwei Schenkel der beiden Winkelbleche miteinander verbunden sind und die Versteifung bilden. Diese Ausführungsform ist gegenüber der vorher beschriebenen Variante insbesondere bei geringeren Stückzahlen von Vorteil, weil auf aufwendige Gussformen verzichtet werden kann.

Nach einem weiteren Merkmal der Erfindung kann die Verbindung zwischen den beiden Bauteilen noch weiter verbessert werden, indem die Versteifung mittels Schrauben mit dem länglichen Bauelement verschraubbar ist. Die Versteifung weist dazu Löcher zur Aufnahme der Schrauben auf. Dadurch lässt sich die Stabilität der Verbindung zusätzlich erhöhen.

Schließlich kann beim erfindungsgemäßen Beschlag die Montageplatte im montierten Zustand das längliche Bauteil teilweise umschließen. Auch dieses Merkmal dient der Verbesserung der Kraft- und Drehmomentübertragung zwischen den beiden Bauteilen.

Der erfindungsgemäße Beschlag ist insbesondere zum Verbinden eines Kantholzes mit einer Platte verwendbar.

Kurze Beschreibung der Zeichnungen

Im Folgenden wird die Erfindung mit mehreren Ausführungsbeispielen anhand von fünf Figuren weiter erläutert.
- Figur 1: zeigt die Montage eines ersten Teils des erfindungsgemäßen Beschlags im länglichen Bauelement in dreidimensionaler Ansicht.
- Figur 2: zeigt den Vorgang des Zusammenfügens des ersten Teils und des zweiten Teils des Beschlags in dreidimensionaler Ansicht.
- Figur 3: zeigt den letzten Montageschritt zum Verbinden der beiden Montageteile in dreidimensionaler Ansicht.
- Figur 4: zeigt im Querschnitt die im länglichen Bauelement montierten beiden Gewindehülsen.
- Figur 5: zeigt die beiden mit dem erfindungsgemäßen Beschlag verbundenen Bauelemente in der Draufsicht.

### Wege zur Ausführung der Erfindung

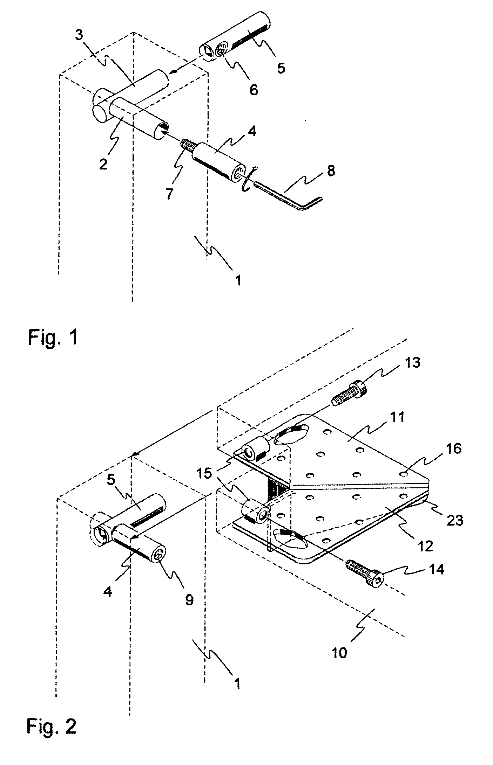

Um den erfindungsgemäßen Beschlag montieren zu können, sind vorab vorbereitende Arbeiten erforderlich. So wird, wie in Figur 1 gezeigt, im länglichen Bauelement 1, welches beispielsweise ein Tischbein sein kann und die Form eines Vierkantholzes hat, im oberen Bereich des länglichen Bauelements 1 ein erstes Sackloch 2 und ein zweites Sackloch 3 gebohrt. Die beiden Sacklöcher 2 und 3 werden dabei so tief gebohrt, dass sie sich kreuzen. Anschließend kann in das Sackloch 3 eine Gewindehülse 5 mit einem Innengewinde 6 eingeführt werden. Dabei ist darauf zu achten, dass das Innengewinde 6 so ausgerichtet ist, dass nach dem Einführen einer zweiten Gewindehülse 4 in das Sackloch 2 dessen Außengewinde 7 in das Innengewinde 6 einschraubbar ist. Die Gewindehülse 4 ist vorzugsweise so ausgebildet, dass sie in ihrem Inneren Halt für einen Inbusschlüssel 8 liefert. Nachdem die beiden Gewindehülsen 4 und 5 mit Hilfe des Inbusschlüssels 8 fest miteinander verschraubt sind, sind die am länglichen Bauelement 1 erforderlichen Arbeiten abgeschlossen.

Anschließend wird, wie in Figur 2 gezeigt, auf die Unterseite eines flächigen Bauelements, welches beispielsweise eine Tischplatte sein kann, eine Montageplatte 11, 12 geschraubt. Die Verschraubung erfolgt dabei mittels in Figur 2 nicht gezeigten Schrauben, welche in eigens dafür vorgesehene Schraubenlöcher 16 eingedreht werden. Die Tischplatte kann beispielsweise eine furnierte Spanplatte oder auch eine Massivholzplatte sein. Die Montageplatte 11, 12 weist zudem zwei Hülsen 15 auf, die z.B. durch Schweissen mit der Montageplatte 11, 12 fest verbunden sind. Die in Figur 2 gezeigte Ausführungsform der Montageplatte 11, 12 besteht aus einem ersten Blechwinkel 11 und einem zweiten Blechwinkel 12, die beispielsweise mittels einer Verschweißung fest miteinander verbunden sind. Der auf der Unterseite der Montageplatte 11, 12 liegende Schenkel 23 des Blechwinkels 12 dient zur Versteifung der gesamten Montageplatte 11, 12. Das gleiche gilt sinngemäß für den nach unten weisenden Schenkel 22 des Blechwinkels 11, der in Figur 2 durch den Schenkel 23 zum Teil verdeckt ist. Mit Hilfe der beiden Schrauben 13 und 14, welche durch die beiden Hülsen 15 gesteckt werden, wird die Montageplatte 11, 12 mit den beiden Gewindehülsen 4 und 5 verschraubt.

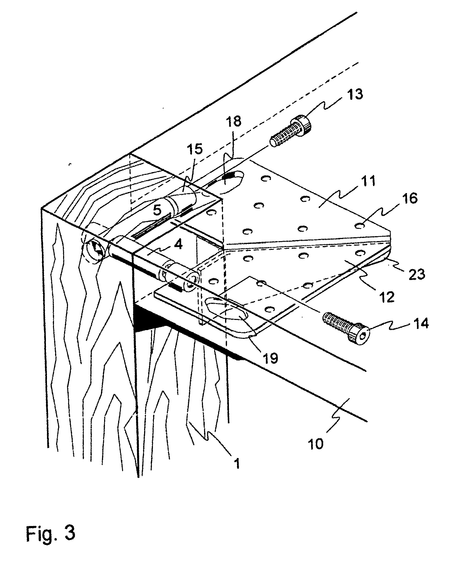

In Figur 3 ist in einer dreidimensionalen Ansicht das an die Platte 10 angesetzte längliche Bauteil 1 in Form eines Vierkantholzes gezeigt. In diesem Zustand können die beiden Schrauben 13 und 14 durch die Hülsen 15 mit den beiden Gewindehülsen 4 und 5 verschraubt werden. Die Montageplatte 11, 12 weist zwei Aussparungen 18, 19 auf, die zum Einführen der beiden Schrauben 13 bzw. 14 in die Hülsen 15 dienen. Die beiden Aussparungen 18 und 19 sind dabei so geformt, dass die beiden Schrauben 13 und 14 mit Hilfe eines gewöhnlichen Inbusschlüssels mit den beiden Gewindehülsen 4 und 5 verschraubt werden können.

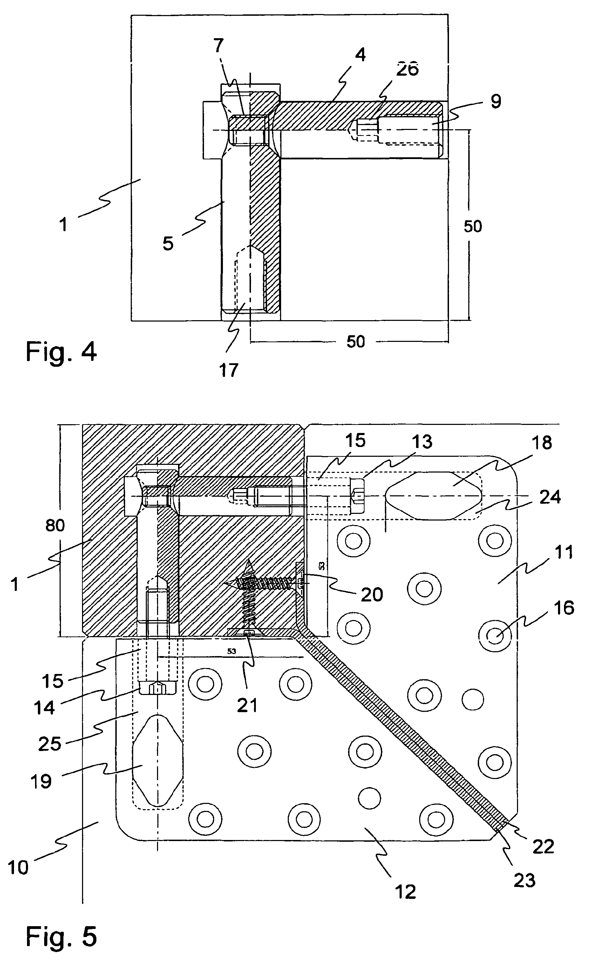

In Figur 4 ist in der Draufsicht das längliche Bauteil 1 mit den beiden miteinander verschraubten Gewindehülsen 4 und 5 im Querschnitt gezeigt. Wie aus Figur 4 zu entnehmen ist, weist die Gewindehülse 4 in ihrem Inneren eine Vertiefung 26 für einen Inbusschlüssel auf. Im Anschluss an die Vertiefung 26 erstreckt sich in der Gewindehülse 4 ein Innengewinde 9, in das die Schraube 13 einschraubbar ist.

In Figur 5 sind die Tischplatte 10, der erfindungsgemäße Beschlag und das Tischbein 1 in montierter Form in der Draufsicht gezeigt. In dieser Darstellung ist zu erkennen, dass die beiden senkrecht stehenden Schenkel 22 und 23 der beiden Blechwinkel 11 und 12 über Holzschrauben 20 und 21 mit dem Tischbein 1 verschraubt sind. Dies hat den Vorteil, dass sich dadurch die Stabilität und damit die Steifigkeit der Verbindung zwischen Tischbein 1 und Tischplatte 10 weiter erhöhen lässt. Um die beiden Schrauben 13 und 14 in die Hülsen 15 einführen zu können und die beiden Schrauben 13 und 14 mit den beiden Gewindehülsen 4 und 5 mit Hilfe beispielsweise eines Inbusschlüssels verschrauben zu können, weist die Tischplatte 10 eine erste Nut 24 und eine zweite Nut 25 auf. Die Breite und Tiefe der beiden Nuten 24 und 25 ist an die Schrauben 13 und 14 sowie das verwendete Werkzeug zum Einbringen der Schrauben angepasst.

### Dimensionierungsbeispiel

Für eine stabile und sichere Befestigung eines hölzernen Tischbeins 1 mit einer Seitenlänge von 80 x 80 mm werden zwei Gewindehülsen 4 und 5 aus Metall verwendet, die einen Außendurchmesser von 14 mm aufweisen. Die beiden Sacklöcher 2 und 3 wurden im beschriebenen Ausführungsbeispiel im Abstand von 50 mm, gemessen von der Außenkante des Tischbeins 1, entfernt in das Tischbein 1 gebohrt. Die beiden Innengewinde 9 und 17 der beiden Gewindehülsen 4 und 5 sind im vorliegenden Beispiel als M8-Gewinde ausgebildet.

Die Montageplatte 11, 12 muss nicht, wie in den Figuren 2 bis 5 dargestellt, aus zwei Blechwinkeln 11 und 12 bestehen, welche im Bereich der beiden Schenkel 22 und 23 miteinander verschweißt sind, sondern kann auch als Gussteil hergestellt werden. Um die nötige Steifigkeit zu erreichen, ist es jedoch von Vorteil, die Montageplatte 11, 12 aus Metall herzustellen.

Mit Hilfe des erfindungsgemäßen Beschlags lassen sich auch leicht spaltende Hölzer, wie beispielsweise Tanne, Fichte oder Kastanie als Tischbeine verwenden und mit einer beliebigen Tischplatte 10 verbinden. Statt, wie in den Figuren 2, 3 und 5 dargestellt, die beiden Hülsen 15 in einer Ausnehmung 24 bzw. 25 der Tischplatte 10 anzuordnen, können diese auch auf der Unterseite der Montageplatte 11, 12 befestigt sein. Falls diese Lösung aus optischen Erwägungen heraus nicht ausgeschlossen wird, hat diese den Vorteil, dass auf die beiden Nuten 24 und 25 in der Tischplatte 10 verzichtet werden kann.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

Ein Vorteil des erfindungsgemässen Beschlags besteht darin, dass mit dessen Hilfe das Tischbein 1 bei Bedarf jederzeit wieder von der Tischplatte 10 gelöst werden kann. Da die im Tischbein 1 integrierten Gewindehülsen 4 und 5 nicht über die Aussenflächen des Tischbeins 1 hinausragen, können sie während eines Transports, beispielsweise bei der Lieferung des Möbeis oder einem Umzug, auch nicht stören.

### Bezugszeichenliste

- 1: Vierkantholz
- 2: Bohrung
- 3: Bohrung
- 4: erste Gewindehülse
- 5: zweite Gewindehülse
- 6: Innengewinde
- 7: Aussengewinde
- 8: Inbusschlüssel
- 9: Innengewinde
- 10: Holzplatte
- 11: erstes Winkelblech
- 12: zweites Winkelblech
- 13: erste Schraube
- 14: zweite Schraube
- 15: Muffen
- 16: Bohrung
- 17: Innengewinde
- 18: erste Aussparung
- 19: zweite Aussparung
- 20: erste Holzschraube
- 21: zweite Holzschraube
- 22: Schenkel des ersten Winkelblechs
- 23: Schenkel des zweiten Winkelblechs
- 24: Nut in der Holzplatte
- 25: weitere Nut in der Holzplatte
- 26: Vertiefung für Inbusschlüssel

## Patentansprüche

1. Beschlag zum Verbinden eines länglichen und eines flächigen Bauteils,
- bei dem zwei jeweils ein Schraubgewinde (6, 7) aufweisende Montageelemente (4, 5) vorgesehen sind, mittels dessen die Montageelemente (4, 5) im länglichen Bauteil (1) miteinander verschraubbar sind,
- bei dem eine Montageplatte (11, 12) vorgesehen ist, die am flächigen Bauteil (10) befestigbar ist und die über zwei Befestigungselemente (13, 14) mit den beiden Montageelementen (4', 5) verbindbar ist.

2. Beschlag nach Patentanspruch 1,
bei dem die beiden Montageelemente (4, 5) so ausgebildet sind, dass sie, wenn sie miteinander verbunden sind, einen starren rechten Winkel bilden.

3. Beschlag nach Patentanspruch 1 oder 2,
bei dem die beiden Befestigungselemente (13, 14) Schrauben sind.

4. Beschlag nach einem der Patentansprüche 1 bis 3,
bei dem die Montageplatte (11, 12) mittels Schrauben am flächigen Bauteil (10) befestigbar ist.

5. Beschlag nach einem der Patentansprüche 1 bis 4,
bei dem die Montageplatte (11, 12) zwei Hülsen (15) aufweist, wobei die Hülsen (15) in Verbindung mit den beiden Befestigungselementen (13, 14) die Montageplatte (11, 12) gegenüber den Montageelementen (4, 5) ausrichten.

6. Beschlag nach einem der Patentansprüche 1 bis 5, bei dem die Montageplatte (11, 12) eine Versteifung (22, 23) aufweist.

7. Beschlag nach einem der Patentansprüche 1 bis 6, bei dem die Montageplatte (11, 12) aus Metallguss ist.

8. Beschlag nach Patentanspruch 6,
bei dem die Montageplatte (11, 12) zwei Winkelbleche (11, 12) aufweist, wobei zwei Schenkel (22, 23) der beiden Winkelbleche (11, 12) miteinander verbunden sind und die Versteifung bilden.

9. Beschlag nach Patentanspruch 7 oder 8,
bei dem die Versteifung (22, 23) Löcher zur Aufnahme von Schrauben (20, 21) aufweist, mittels denen sie mit dem länglichen Bauelement (1) verschraubbar ist.

10. Beschlag nach einem der Patentansprüche 1 bis 9,
bei dem im montierten Zustand die Montageplatte (11, 12) das längliche Bauteil (1) teilweise umschliesst.

11. Verwendung des Beschlags nach einem der Patentansprüche 1 bis 10 zum Verbinden eines Kantholzes (1) mit einer Platte (10).

## Claims

1. A fitting for connecting an oblong component and a planar component,
- wherein two mounting elements (4, 5) are provided, each having a screw thread (6, 7) by means of which the mounting elements (4, 5) can be screwed together in the oblong component (1), and
- wherein a mounting plate (11, 12) is provided, which can be fastened to the planar component (10) and which can be connected to the two mounting elements (4; 5) by means of two fastening elements (13, 14).

2. The fitting according to claim 1,
wherein the two mounting elements (4, 5) are designed such that they form a rigid right angle when they are connected to each other.

3. The fitting according to claim 1 or 2,
wherein the two fastening elements (13, 14) are screws.

4. A fitting according to any one of claims 1 to 3,
wherein the mounting plate (11, 12) can be fastened to the planar component (10) by means of screws.

5. A fitting according to any one of claims 1 to 4,
wherein the mounting plate (11, 12) has two sleeves (15), the sleeves (15) in conjunction with the two fastening elements (13, 14) aligning the mounting plate (11, 12) relative to the mounting elements (4, 5).

6. A fitting according to any one of claims 1 to 5,
wherein the mounting plate (11, 12) comprises a reinforcement (22, 23).

7. A fitting according to any one of claims 1 to 6,
wherein the mounting plate (11, 12) is made of cast metal.

8. The fitting according to claim 6,
wherein the mounting plate (11, 12) comprises two angle plates (11, 12), two limbs (22, 23) of the two angle plates (11, 12) being connected to each other and forming the reinforcement.

9. The fitting according to claim 7 or 8,
wherein the reinforcement (22, 23) comprises holes for receiving screws (20, 21) by means of which the reinforcement can be screwed to the oblong component (1).

10. A fitting according to any one of claims 1 to 9,
wherein the mounting plate (11, 12), in the mounted state, partially surrounds the oblong component (1).

11. Use of the fitting according to any one of claims 1 to 10 for connecting squared timber (1) to a plate (10).

## Revendications

1. Ferrure pour relier un composant oblong et un composant plan,
- dans laquelle deux éléments de montage (4, 5) sont prévus, chacun ayant un filetage (6, 7) au moyen duquel les éléments de montage (4, 5) peuvent être vissés ensemble dans le composant oblong (1), et
- dans laquelle une plaque de montage (11, 12) est prévue, laquelle peut être fixée au composant plan (10) et laquelle peut être reliée aux deux éléments de montage (4, 5) au moyen de deux éléments de fixation (13, 14).

2. Ferrure selon la revendication 1,
dans laquelle les deux éléments de montage (4, 5) sont conçus de telle sorte qu'ils forment un angle droit rigide lorsqu'ils sont reliés l'un à l'autre.

3. Ferrure selon la revendication 1 ou 2,
dans laquelle les deux éléments de fixation (13, 14) sont des vis.

4. Ferrure selon l'une quelconque des revendications 1 à 3,
dans laquelle la plaque de montage (11, 12) peut être fixée au composant plan (10) au moyen de vis.

5. Ferrure selon l'une quelconque des revendications 1 à 4,
dans laquelle la plaque de montage (11, 12) a deux manchons (15), les manchons (15), conjointement avec les deux éléments de fixation (13, 14), alignant la plaque de montage (11, 12) par rapport aux éléments de montage (4, 5).

6. Ferrure selon l'une quelconque des revendications 1 à 5,
dans laquelle la plaque de montage (11, 12) comprend un renforcement (22, 23).

7. Ferrure selon l'une quelconque des revendications 1 à 6,
dans laquelle la plaque de montage (11, 12) est faite de métal coulé.

8. Ferrure selon la revendication 6,
dans laquelle la plaque de montage (11, 12) comprend deux équerres (11, 12), deux branches (22, 23) des deux équerres (11, 12) étant reliées l'une à l'autre et formant le renforcement.

9. Ferrure selon la revendication 7 ou 8,
dans laquelle le renforcement (22, 23) comprend des trous destinés à recevoir des vis (20, 21) au moyen desquelles le renforcement peut être vissé sur le composant oblong (1).

10. Ferrure selon l'une quelconque des revendications 1 à 9,
dans laquelle la plaque de montage (11, 12), dans l'état monté, entoure partiellement le composant oblong (1).

11. Utilisation de la ferrure telle que définie à l'une quelconque des revendications 1 à 10 pour relier du bois de construction équarri (1) à une plaque (10).
